(19) Europäisches Patentamt
European Patent Office
Office européen des brevets

(11) Numéro de publication: **0 347 349**
**A1**

(12) **DEMANDE DE BREVET EUROPEEN**

(21) Numéro de dépôt: **89420214.2**

(22) Date de dépôt: **13.06.89**

(51) Int. Cl.[4]: **C 08 K 3/22**
C 08 L 83/04

(30) Priorité: **15.06.88 FR 8808262**

(43) Date de publication de la demande:
**20.12.89 Bulletin 89/51**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Millet, Claude**
**14, rue Jean de la Bruyère**
**F-69800 Saint-Priest (FR)**

(74) Mandataire: **Vogt, Bernard et al**
**RHONE-POULENC CHIMIE Service Brevets Chimie**
**Centre de Recherches des Carrières B.P. 62**
**F-69192 Saint-Fons Cédex (FR)**

(54) **Elastomères silicones, à résistance à la flamme améliorée.**

(57) Compositions pour l'obtention d'élastomères silicones, compacts ou cellulaires vulcanisables à température ambiante ou à une température inférieure à 150°C, résistant à la flamme, caractérisées en ce qu'elles contiennent de l'oxyde cérique de surface BET supérieure ou égale à 40 $m^2/g$, de préférence supérieure à 85 $m^2/g$. Elastomères obtenus avec de telles compositions.

EP 0 347 349 A1

## Description

### ELASTOMERES SILICONES, A RESISTANCE A LA FLAMME AMELIOREE

La présente invention concerne des compositions pour l'obtention d'élastomères silicones, compacts ou cellulaires, vulcanisables à température ambiante (élastomères appelés RTV) ou à des températures inférieures à 150° C (élastomères appelés LTV), de préférence inférieures à 100° C et dont la résistance à la flamme est améliorée.

Il est connu par le brevet français n° 2 166 313 de la Société Rhône-Poulenc que des élastomères silicones vulcanisables à chaud (EVC), de bonne résistance à la flamme, peuvent être obtenus à partir de compositions comprenant de l'oxyde cérique ($CeO_2$) et du platine. De tels élastomères (EVC) sont vulcanisés à des températures supérieures à 150°C, parfois supérieures à 200°C.

Il s'est avéré que la demanderesse n'était pas arrivée, jusqu'à ce jour, à améliorer de façon importante, la résistance à la flamme des élastomères appelés RTV ou LTV mentionnés ci-dessus, avec du platine ou de l'oxyde cérique en utilisant l'enseignement du brevet français 2 166 313 cité ci-avant. Or la demanderesse vient de mettre en évidence qu'en utilisant un oxyde cérique ayant des propriétés particulières, il lui est maintenant possible d'améliorer significativement la résistance à la flamme de tels élastomères.

Un but de la présente invention est donc d'obtenir des élastomères silicones, RTV ou LTV sous forme compacte ou cellulaire, ayant de bonnes propriétés de résistance à la flamme.

Un autre but de la présente invention est l'obtention d'élastoméres silicones, RTV ou LTV, ayant de bonnes propriétés de resistance à la flamme, que ces élastomères RTV ou LTV aient été obtenus à partir de compositions dites monocomposantes ou de compositions dites bi-composantes.

Un autre but de la présente invention est l'obtention d'élastomères silicones RTV ou LTV, ayant de bonnes propriétés de résistance à la flamme, que ces élastomères aient été obtenus par réaction de polycondensation ou par réaction de polyaddition.

Un autre but de la présente invention est l'obtention d'élastomères silicones RTV ou LTV ayant de bonnes propriétés de résistance à la flamme, tout en ayant de bonnes propriétés mécaniques.

Il a donc été trouvé, et c'est ce qui fait l'objet de la présente invention, des compositions pour l'obtention d'élastomères vulcanisables à température ambiante ou a température inférieure à 150°C, ces élastomères étant, compacts ou cellulaires et résistant à la flamme, les dites compositions étant caractérisées en ce qu'elles contiennent de l'oxyde cérique de surface spécifique BET supérieure ou égale à 40 m2/g.

L'objet de la présente invention concerne également les élastomères obtenus avec de telles compositions.

L'oxyde cérique utilisé dans les compositions selon la présente invention a une surface BET égale ou supérieure à 40 m2/g, avantageusement supérieure ou égale à 85 m2/g. De préférence la surface spécifique de cet oxyde cérique est supérieure ou égale à 100 m2/g après calcination à une température comprise entre 400 et 500° C. Cette surface spécifique est déterminée selon la méthode BRUNAUER EMMET-TELLER (BET), décrite dans le périodique "The Journal of American Society 1938, 60, 309.

Des procédés permettant l'obtention d'un tel oxyde cérique sont décrits notamment dans les demandes de brevets européens EP 153 227 et 153 228 de la Société Rhône-Poulenc.

Les compositions selon la présente invention, permettant l'obtention d'élastomères silicones à résistance à la flamme améliorée, comprennent donc de l'oxyde cérique tel que celui défini ci-avant et elles comprennent généralement de plus du platine. Ce platine peut être notamment :

- sous forme :
. de platine métallique (élémentaire), de préférence déposé sur l'oxyde cérique,
- sous forme :
. d'acide chloroplatinique $H_2PtCl_6, 6H_2O$, tel que décrit dans le brevet US 2 823 218,
. d'acide chloroplatinique anhydre,
. de $PtCl_2 [P(CH_2 - CH_2 - CH_3)_3]_2$
. de complexes tels que ceux de formule ($PtCl_2$, oléfine)$_2$ et H($PtCl_3$, oléfine) décrits dans le brevet US 3 159 601, l'oléfine du complexe représentant notamment l'éthylène, le propylène, le butylène, le cyclohexène, le styrène,
. de ($PtCl_2$, $C_3H_6$)$_2$, complexe de chlorure de platine et de cyclopropane, décrit dans le brevet américain 3 159 662,
. des produits, composés ou complexes, suivants :

$Pt(CH_3CN)_2Cl_2$, $[Pt(CH_3CN)_2(NH_3)_4]Cl_2$
$Pt(NH_3)_2Cl_2$,$K[PtCl_3(CH_2CH_2CH_2OH)]$
$PtBr_2(C_2H_4)_2$,$K[PtBr_3(C_2H_4)]$, $PtCl_2C_2C_2H_4$
$(CH_3)_2C{=}CH_2.PtCl_2$,$H_2Pt(CN)_4.5H_2O$
$H[PtCl_3(CH_3CN)]$,$Pt(NH_3)_2(CNS)_2$
$[Pt(NH_3)_4].[PtCl_4]$, $PtCl_2[P(CH_2CH_3)_3]_2$,$PtCl_2.PCl_3$
$PtCl_2$,$P(OH)_3$,$PtCl_2.P(OCH_2CH_3)_3$
$PtCl_2$,$[P(OCH_2CH_3)_3]_2$, $Pt(OOCCH_2SCH_2CH_3)_2$
$Pt(CN)_3$,$(CH_3)_4Pt$,$(CH_3)_3Pt-Pt(CH_3)_3$

$$(CH_3)_3Pt(CH_3COCH{=}\overset{-O}{\overset{|}{C}}CH_3)$$

$PtCl_2CO$ et $PtBr_2CO$

Lorsque le platine est utilisé sous forme de platine métallique déposé sur l'oxyde cérique, il peut être prépararé de la façon décrite par BLANCHARD G., CHARCOSSET H., CHENEBAUX M.T., PRIMET M. dans PREPARATION OF CATALYSTS, TOME II, volume 3, publié par ELSEVIER en 1979, page 197. Généralement la teneur, en poids, du platine métallique déposé sur l'oxyde cérique est comprise entre 0,01 et 1 %, de préférence entre 0,05 et 0,5 %.

Les compositions selon la présente invention concernent notamment celles du type "monocomposantes" (c'est-à-dire à un seul emballage), stables au stockage et permettant l'obtention d'élastomères durcissant en présence d'humidité, en particulier d'humidité apportée par l'air ambiant ou par de l'eau générée au sein des compositions lors de leur emploi. De telles compositions sont connues notamment par la demande de brevet européenne EP-A 235 049 (page 20, ligne 13 à page 43, ligne 10) de la société Rhône-Poulenc, citée comme référence. Ces compositions comprennent, de façon connue, en poids :

A) 100 parties d'un polymère alpha-oméga dihydroxydiorganopolysiloxane, de viscosité 500 à 1 000 000 mPa.s à 25°C, formé d'une succession de motifs diorganosiloxy de formule $R_2SiO$ dans laquelle les symboles R, identiques ou différents, représentent des radicaux hydrocarbonés ayant de 1 à 10 atomes de carbone, substitués ou non par des atomes d'halogène ou des groupes cyano.

B) 0,5 à 20 parties d'un agent réticulant choisi parmi les composés organosiliciques portant plus de deux radicaux hydrolysables liés aux atomes de silicium, par molécule.

C) 0 à 250 parties de charges minérales.

D) 0 à 20 parties d'un agent d'adhérence.

E) 0 à 2 parties d'un catalyseur de condensation réticulation, de préférence 0,001 à 0,8 parties.

Les polymères $\alpha$ $\omega$ di(hydroxy)diorganopolysiloxanes cités en A de viscosité 500 à 1 000 000 mPa.s à 25°C, de préférence 1 000 à 700 000 mPa.s à 25°C, sont des polymères linéaires, constitués essentiellement de motifs diorganosiloxy de formule précitée $R_2SiO$, et bloqués à chaque extrémité de leur chaîne par un groupe hydroxyle; toutefois, la présence de motifs monoorganosiloxy de formule $RSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alcoyles ont de 2 à 3 atomes de carbone tels que les radicaux $\beta$ - cyanoéthyle et $\gamma$ -cyanopropyle.
- les radicaux méthyle, phényle, vinyle et trifluoro-3,3,3 propyle sont les radicaux préférés.

A titre d'exemples concrets de motifs représentés par la formule $R_2SiO$ on peut citer ceux de formules :

$(CH_3)_2SiO$,

$CH_3(CH_2=CH)SiO$

$CH_3(C_6H_5)SiO$

$(C_6H_5)_2SiO$,

$CF_3CH_2CH_2(CH_3)SiO$

$NC-CH_2CH_2(CH_3)SiO$

$NC-CH(CH_3)CH_2(CH_2=CH)SiO$

$NC-CH_2CH_2CH_2(C_6H_5)SiO$

Il doit être compris que l'on peut utiliser comme polymère cité en (A) un mélange constitué de polymères $\alpha\omega$ di(hydroxy)diorganopolysiloxanes qui diffèrent entre eux par le poids moléculaire et/ou la nature des groupements liés aux atomes de silicium.

Ces polymères $\alpha$ $\omega$ di(hydroxy)diorganopolysiloxanes (A) sont commercialisés ; en outre, ils peuvent être aisément fabriqués selon des techniques maintenant bien connues.

Les agents réticulants (B) sont employés à raison de 0,5 à 20 parties, de préférence 1 à 18 parties, pour 100 parties de polymères $\alpha$ $\omega$ di(hydroxy)diorganopolysiloxanes (A). Ce sont des composés organosiliciques portant plus de deux radicaux hydrolysables, liés aux atomes de silicium, par molécule.

Comme exemples de radicaux hydrolysables convenables peuvent être cités les radicaux amino-N substitué, amido-N substitué, aminoxy-N,N disubstitué, cétiminoxy, aldiminoxy, alcosy, alcoxyalkylène-oxy, enoxy, acyloxy.

De préférence l'agent réticulant cité en B répond à la formule

$R^Z{}_p\ Si\ X_{4-p}$

dans laquelle p égale zéro ou un, $R^Z$ étant notamment choisi parmi les groupements ayant pour formule :

- $CH_3$, - $C_2H_5$, - $C_6H_5$, $CH_2=CH-$, $NH_2-(CH_2)_r-$, r étant égal à 1, 2, 3 ou 4, $NH_2(CH_2)_2NH(CH_2)_3$ -,

$NH_2(CH_2)_3O(CH_3)_2C-CH = CH$ -,
X représentant un groupement hydrolysable répondant à la formule :
- O - CO - $R_5$, dans laquelle $R_5$ représente un groupement alcoyle ou alcényle ayant de 2 à 20 atomes de carbone,
- O - $R_6$, dans laquelle $R_6$ représente un groupement alcoyle ayant de 1 à 4 atomes de carbone ou un groupement $-(CH_2)_n$ - O - $CH_3$ dans lequel n égal un nombre entier compris entre 1 et 4,

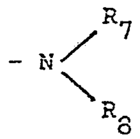

dans laquelle $R_7$ et $R_8$ représentent chacun un atome d'hydrogène ou un alcoyle inférieur ayant de 1 à 4 atomes de carbone,

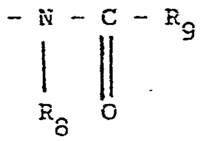

dans laquelle $R_9$ représente un groupement alcoyle ayant de 1 à 4 atomes de carbone ou un groupement phényle,

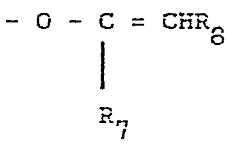

dans laquelle $R_8$ et $R_7$ ont la signification donnée ci-avant,

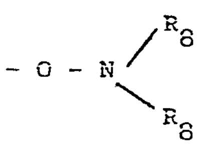

dans laquelle $R_8$ a notamment la signification donnée ci-avant,

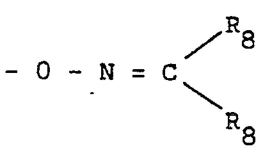

dans laquelle $R_8$ a notamment la signification donnée ci-avant,

Les charges minérales citées en C sont utilisées à raison de 0 à 250 parties, de préférence 5 à 200 parties, pour 100 parties des polymères **a - s** di(hydroxy)diorganopolysiloxanes (A).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges (C) peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505 ; brevet anglais 1 024 234). Les charges traitées renferment, dans la plupart des cas, de 3 à 30 % de leur poids de composés organosiliciques.

Les charges (C) peuvent être constituées d'un mélange de plusieurs types de charges de granulométrie différente ; ainsi par exemple, elles peuvent être constituées de 30 à 70 % de silices finement divisées de surface spécifique BET supérieure à 40 $m^2/g$ et de 70 à 30 % de silices plus grossièrement divisées de surface spécifique inférieure à 30 $m^2/g$.

L'agent d'adhérence cité en D est utilisé à raison de 0 à 20 parties, de préférence de 0,2 à 15 parties, pour 100 parties du polymère alpha-oméga-dihydroxydiorganopolysiloxane cité en A.

De préférence, cet agent d'adhérence est choisi parmi les composés organosiliciques portant à la fois (1) des groupes organiques substitués par des radicaux choisis dans le groupe des radicaux amino, uréido, isocyanato, epoxy, alkényle, isocyanurates, hydantoyle, mercaptoester et (2) des groupes hydrolysables liés aux atomes de silicium.

A titre illustratif peuvent être cités les composés organosiliciques répondant aux formules ci-après (accompagnées des numéros des brevets les décrivants) :

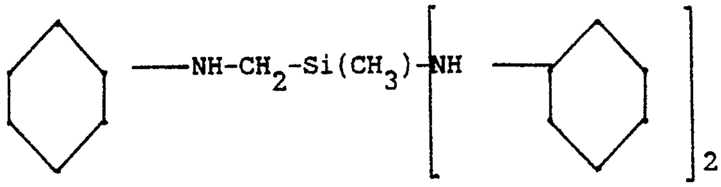

Demande européenne 74 001

- $NH_2CH_2CH_2NH-CH_2CH(CH_3)COO(CH_2)_3Si(OCH_3)_3$

Demande allemande 3 304 182

- $\left[(CH_3)_3CO\right]_2Si\left(OCOCH_3\right)_2$

Brevet américain 4 356 116

- 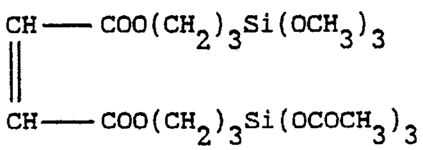

Brevet américain 4 273 698

- 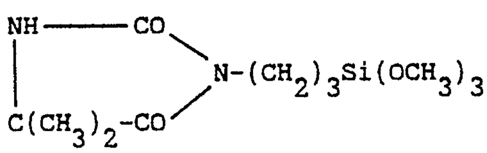

Demande européeenne 31 996

- $(C_2H_5O)_3Si(CH_2)_3NHCO-CH=CH-COOH$

Brevet américain 4 466 739

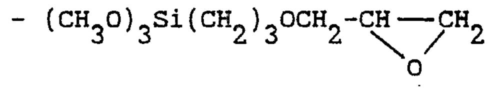

Brevet américain 4 115 356

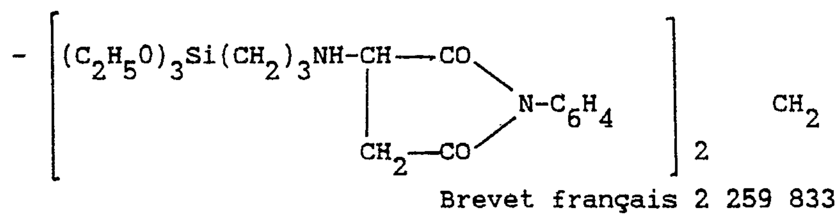

Brevet français 2 259 833

Les compositions monocomposantes décrites ci-avant comprennent avantageusement des catalyseurs cités en E pour accélérer la réaction de durcissement, ces catalyseurs étant par exemple des carboxylates d'étain, du diacétate de dibutylétain, un chélate d'étain de valence IV, d'un chélate d'étain de valence IV hexacoordiné (voir brevet français FR 2 557 582), un dérivé organique du titane ou du zirconium (FR 2 531 095), un mélange d'un bis(β-dicétonate) de diorganoétain avec un dérivé organique de l'étain de valence IV exempt de fonction β-dicétonato (FR 2 592 657).

Il doit être indiqué que les compositions monocomposantes ci-avant décrites peuvent comprendre, à la place des polymères A α ω dihydroxydiorganopolysiloxane précédemment décrits, des polymères A' résultant de l'action de l'agent réticulant décrit en B sur les polymères A. Dans ce dernier cas l'agent réticulant B peut être supprimé de la composition ou sa quantité dans la composition peut être réduite. On ne retrouve alors que 0 à 15 parties de B dans les compositions pour 100 parties du polymère A'.

La réaction de A sur B peut avoir lieu en présence de divers catalyseurs tels qu'une amine organique (brevet américain US-A-3 542 901), un dérivé organique du titane (brevet américain US-A-4 111 890), d'un carbamate (demande de brevet européen EP-A-210 402) et une hydroxylamine N-N disubstituée (demande de brevet européen EP-A-70 786).

Les compositions "monocomposantes" selon la présente invention comprenant de l'oxyde cérique de surface spécifique BET supérieure ou égale à 40 m2/g, de préférence supérieure à 85 m2/g. La quantité d'oxyde cérique par rapport à 100 parties en poids du polymère A ou A' est généralement comprise entre 0,1 et 25 parties

La quantité de platine utilisée, sous forme de platine métallique déposé sur l'oxyde cérique ou/et sous forme de composé ou de complexe de platine est généralement de 1 à 250 ppm (parties par million) par rapport au polymère A ou A', de préférence entre 5 et 100 ppm.

Les compositions selon la présente invention concernant aussi les compositions telles que définies ci-avant pour lesquelles les X de l'agent réticulant cité en B représentent des groupes acyloxy et dont la réticulation est accélérée par addition d'hydroxyde alcalino-terreux ou de phosphate. Ces compositions sont décrites dans les demandes de brevet européen EP-A 118 325 et EP-A 117 772, cités comme référence, de la Société Rhône-Poulenc. La quantité de platine et d'oxyde cérique de ces compositions sont indiquées au paragraphe ci-avant.

Les compositions selon la présente invention concernent également les compositions dites "bi-composantes", c'est-à-dire livrées dans deux emballages distincts. Pour l'obtention de l'élastomère on mélange le contenu des deux emballages et la réticulation a lieu grâce au catalyseur. Si on mettait les composants des deux emballages dans le même emballage il serait impossible de conserver la composition résultante, même à l'abri de l'humidité atmosphérique. Les compositions "bi-composantes" sont donc conditionnées en deux emballages et seul l'un d'entre eux comporte le catalyseur de réticulation. De telles compositions "bi-composantes" de condensation décrites dans le brevet européen 2 350 049, pages 43 à 46 sont formées par mélange en poids de :

$A_1$) 100 parties d'un polymère alpha-oméga dihydroxydiorganopolysiloxane de viscosité 700 à 1 000 000 mPa.s à 25° C, semblable à celui décrit en A pour les compositions monocomposantes.

$B_1$) 1 à 20 parties, de préférence 2 à 15 parties, d'un produit choisi parmi

- i) un silane de formule $R^{17}{}_KSi(OR^{16})4\text{-}k$ dans laquelle les symboles $R^{16}$, identiques ou différents, représentent des radicaux alkyles en $C_1$-$C_8$, des radicaux alcoxyalkylènes en $C_3$-$C_6$, le symbole $R^{17}$ représente un radical hydrocarboné en $C_1$-$C_{10}$, le symbole k représente zéro ou un,

-(2i) les produits d'hydrolyse partielle du silane de formule $Si(OR^{16})_4$ dans laquelle le symbole $R^{16}$ a la signification donnée sou (i).

- ($C_1$) : 0 à 150 parties de charges minérales.

- $D_1$ : 0,01 à 10 parties, de préférence 0,1 à 8 parties d'un catalyseur,

Le polymère ($A_1$) a une viscosité de 700 à 1 000 000 de mPa.s à 25° C, de préférence 1 000 à 800 000 mPa.s

à 25° C ; les radicaux organiques liés à ces atomes de silicium sont de préférence des radicaux méthyle, éthyle, propyle, vinyle, phényle. Généralement sont choisis des copolymères portant au moins 80 % de radicaux méthyle.

Les symboles $R^{16}$ représentent :

- des radicaux alkyles en $C_1$-$C_8$ tels que les radicaux méthyle, éthyle, propyle, butyle, pentyle, éthyl-2 hexyle.
- des radicaux alcoxyalkylènes en $C_3$-$C_6$ tels que ceux de formules :

$CH_3OCH_2CH_2$-
$CH_3OCH_2CH(CH_3)$-
$CH_3OCH(CH_3)CH_2$-
$CH_3OCH_2CH(CH_3)$-

Les charges $C_1$ sont utilisées à raison de 0 à 150 parties, de préférence de 5 à 120 parties, pour 100 parties de polymère $A_1$. Elles sont identiques aux charges déjà décrites en C pour la préparation des compositions monocomposantes.

Bien entendu les compositions bi-composantes, par polycondensation, décrites ci-avant, contiennent du platine et de l'oxyde cérique de surface spécifique supérieure à 40 m2/g. les quantités de platine et d'oxyde cérique sont les mêmes vis-à-vis du polymères $A_1$ que celles mentionnées vis-à-vis du polymère A ou A′ pour les compositions monocomposantes.

Les compositions selon la présente invention concernent plus spécialement les compositions dites de polyaddition, c'est-à-dire celles résultant du mélange d'une partie A comprenant un polymère polysiloxanes comportant des insaturations éthyléniques fixées à des atomes de silicium de la chaîne avec une partie B comprenant un polymère polysiloxane comportant des atomes d'hydrogène liés à des atomes de silicium de la chaîne. De telles compositions, connues en soi, comprennent ainsi généralement :

$A_2$ - un diorganopolysiloxane vinylée de viscosité comprise entre 100 et 1 000 000 mPa.s à 25° C ayant au moins deux radicaux vinyle par molécule les autres radicaux étant généralement choisis parmi les radicaux méthyle, éthyle, phényle et 3,3,3 trifluoropropyle, au moins 60 % en nombre des radicaux organiques étant des radicaux méthyle.

$B_2$ - un organopolysiloxane présentant au moins 2, de préférence 3 groupes = SiH par molécule, choisi parmi les organopolysiloxanes ramifiés et les diorganosiloxanes linéaires.

$C_2$ - avantageusement une charge minérale telle que celles décrites ci-avant.

$D_2$ - une quantité catalytiquement efficace d'un catalyseur du platine ou du groupe du platine.

La quantité de catalyseur calculée en poids de platine métal est généralement comprise entre 1 et 200 ppm par rapport au poids de $A_2$.

Comme exemples de catalyseurs utilisables on peut citer notamment l'acide chloroplatinique $H_2PtCl_6$, les complexes platine vinylsiloxane décrits dans le brevet français FR-A 1 480 409, les brevets américains US-A 3 715 334, US-A 3 775 452 et US-A 3 814 730, ainsi que les complexes du platine avec un produit organique décrits dans les brevets européens EP-A 188 978 et EP-A 190 530.

Des compositions comportant les constituants $A_2$, $B_2$, $C_2$ et $D_2$ sont bien connues et sont décrites en détail notamment dans les brevets US-A 3 697 473 et US-A 4 340 709 cités comme références.

Il est à noter que les compositions ci-avant comprenant les constituants $A_2$, $B_2$, $C_2$, et $D_2$, généralement bi-composantes (à deux emballages), peuvent éventuellement être présentées en composition monocomposantes (un seul emballage) dans la mesure où elles contiennent un inhibiteur du platine, par exemple un inhibiteur tel que ceux décrits dans le brevet US-A 3 445 420 ou la demande de brevet européen A 146 422.

Les compositions selon la présente invention comprenant les constituants $A_2$, $B_2$, $C_2$, et $D_2$ décrits ci-avant, comprennent de l'oxyde cérique de surface spécifique BET supérieure ou égale à 40 m2/g, de préférence de surface spécifique BET supérieure à 85 m2/g. Généralement la quantité d'oxyde cérique utilisée est, en parties et en poids, comprise entre 0,5 et 25 pour 100 parties du diorganopolysiloxanes $A_2$. La quantité, en parties et en poids, de platine est généralement comprise entre 1 et 250 ppm par rapport au polymère diorganopolysiloxanes $A_2$, de préférence entre 5 et 100 ppm, ce platine étant sous forme de composé ou de complexe du platine, c'est-à-dire de platine "catalytique" pour la réaction d'addition entre $A_2$ et $B_2$ et avantageusement également sous forme de platine métallique déposé sur l'oxyde cérique de grande surface spécifique.

Il a été constaté de plus que les compositions ci-avant comprenant les constituants $A_2$, $B_2$, $C_2$ et $D_2$ avaient encore une résistance à la flamme améliorée si on leur ajoutait, en plus de l'oxyde cérique et du platine, une résine M′Q, c'est-à-dire une résine polysiloxane formée de motifs $H(R^t)_2SiO_{0,5}$ et de motifs $SiO_2$, dans laquelle le rapport des motifs monofonctionnels aux motifs tétrafonctionnels peut varier de 0,5/1 à 10/1, mais est de préférence de 2/1. Le radical $R^t$ peut être un radical hydrocarboné monovalent ou un radical hydrocarboné monovalent halogéné, c'est-à-dire qu'il peut être : - un radical aryle mononucléaire ou binonucléaire tel qu'un radical phényle, tolyle, xylyle, naphtyle, etc... - un radical aryle halogéné mono ou binucléaire, tel qu'un radical chlorophényle, chloronaphtyle, etc..., - un radical alkyle à chaîne courte de 1 à 8 atomes de carbone, portant un groupe aryle mononucléaire, tel qu'un radical benzyle, phényle, etc..., - un radical alkyle à chaîne courte de 1 à 8 atomes de carbone, tel qu'un radical méthyle, éthyle, propyle, butyle, pentyle, hexyle, octyle, etc... - un radical alkyle halogéné tel que par exemple chloropropyle ou trifluoropropyle, - un radical cycloalkyle, tel qu'un radical cyclobutyle, cyclopentyle ou cyclohexyle. De préférence le radical $R^t$ est un groupement méthyle, éthyle ou phényle. La préparation de ces résines dites M′Q est décrite par exemple dans le brevet USA 2 857 356.

La quantité, en parties et en poids, de résine M'Q définie ci-avant est de 1 à 50 parties pour 100 parties du diorganopolysiloxane vinylé $A_2$.

Les compositions organopolysiloxanes selon la présente invention concerne également celles transformables en mousse. De telles compositions sont connues notamment par le brevet US A 3 070 555 (mousse obtenue par réaction de polycondensation entre un polymère polysiloxane à groupements hydroxyle et un polymère polysiloxane hydrogéné), par la demande de brevet européen 235 052 de la société Rhône-Poulenc (concernant une mousse SiH SiVi avec carbonate de calcium et acide carboxylique) et par le brevet français 2 577 233 de la Société RHône-Poulenc. Les quantités de platine et d'oxyde cérique utilisés sont en général de 1 à 250 ppm de platine par rapport au polymère diorganosiloxane vinylé en bout de chaîne ou par rapport au polymère alpha-oméga dihydroxy diorganopolysilane, et de 0,5 à 25 parties en poids d'oxyde cérique pour 100 parties de ces mêmes polymères.

Les élastomères obtenus avec les compositions selon la présente invention peuvent être utilisés par exemple pour éviter la destruction par le feu d'organes vitaux de véhicules (automobiles, avions), pour faire des joints dans la construction, pour étanchéifier, pour faire de l'enrobage de fils électriques.

Les exemples ci-après montrent les améliorations que les compositions selon la présente invention amènent aux élastomères obtenus en ce qui concerne plus particulièrement la résistance à la flamme de tels élastomères.

EXEMPLES 1 A 11:

Des élastomères de type polyaddition SiH/SiVi ont été obtenus à partir de la composition bicomposante ci-après ayant :

- une partie A comprenant :

. 560 g d'une huile ayant une succession de groupements diméthylsiloxy dans sa chaîne bloquée à chaque extrémité par un groupement diméthylvinylsiloxy, de viscosité 600 mPa.s, le pourcentage en poids de groupements vinyle étant de 0,4 % en poids.

. 420 g de farine de quartz référence SIFRACO C 600

. 3 g de noir de carbone référence GRAPHTOL BLN

- du platine catalytique sous forme de complexe organo métallique avec octanol, du type LAMOREAUX (selon USP 3 220 972), pour catalyser la réaction de polyaddition SiH/SiVi entre partie A et partie B défini ci-après. La quantité de platine catalytique est spécifiée ci-après dans les exemples, en mg par kg de composition.

- une partie B comprenant :

. 71,2 g d'une huile de viscosité 30 mPa s comprenant des groupements diméthylsiloxy et des groupements méthylhydrogénosiloxy dans sa chaîne, ainsi que des groupement diméthylhydrogénosiloxy en bout de chaîne. Cette huile contient 0,7 % en poids d'hydrogène.

. 530 g de farine de quartz référence SIFRACO C 600

. 395,8 g de la même huile que celle décrite pour la partie A, ayant une viscosité de 600 mPa.s.

Pour obtenir les élastomères dont on veut vérifier la résistance à la flamme on mélange intimement ces deux parties A et B et laisse réticuler à la température ambiante. Il a été ajouté à cette composition (mélange de A et B), selon les essais, de l'oxyde cérique ($CeO_2$) de surface spécifique 10 m2/g (commercialisée par la Société Rhône-Poulenc sous la référence "cerium oxide LSA") ou de surface spécifique 110 m2/g (commercialisée par le Société Rhône-Poulenc sous la référence "cerium oxide HSA"). De préférence la quantité d'oxyde cérique ajoutée l'est aux dépens de la même quantité de quartz broyé, pour que par exemple la partie B ait toujours la même concentration en charges. Selon les exemples on ajoute aussi de l'oxyde cérique sur lequel du platine métallique (degré d'oxydation zéro) a été déposé (la teneur en Pt de cet oxyde cérique étant de 0,1 %), et de la résine M'Q dont le rapport molaire réel $(OH_3)_2HSi_{0,5}/SiO_2$ est de 2,23 et est obtenue en faisant réagir 2 moles de $(CH_3)_2HSiCl$ avec une mole de $Si(OC_2H_5)_4$.

Les tests de résistance à la flamme des élastomères obtenus sont effectués suivant le protocole défini par the Underwriters Laboratoiries (UL 94V) qui consiste à exposer une éprouvette (dont la longueur est de 127 mm, la largeur de 12,7 mm et l'épaisseur précisée dans les essais ci-après) à deux expositions successives de 10 secondes à une flamme de 980°C, et on mesure après chaque exposition la durée d'extinction ($T_1$ puis $T_2$).

Le tableau joint nous montre les résultats obtenus pour 10 exemples, les résultats $T_1$ et $T_2$ de chaque exemple correspondant à la moyenne de 10 essais. Les exemples 1 à 3 confirment ce qu'il était déjà connu de l'art antérieur, c'est-à-dire que plus on ajoutait de platine catalytique dans la composition plus la résistance à la flamme s'améliorait, mais les valeurs de $T_1$ et $T_2$ obtenus à l'exemple 3 sont importantes et ne s'améliorent guère si on met plus de platine catalytique. Il est à noter que dans le tableau NS veut dire "non significatif", car le temps $T_2$ ne peut être évaluer du fait que l'éprouvette a brulé trop lontemps durant la première exposition à la flamme. L'exemple 4 montre que l'ajout d'oxyde cérique (de surface spécifique BET 10 m2/g) apporte une certaine amélioration, mais que de façon surprenante (voir exemple 5) l'ajout d'oxyde cérique de surface BET de 110 m2/g apporte une amélioration très significative en ce qui concerne la résistance à la flamme. L'exemple n° 8 nous montre également les résultats intéressants obtenus en ajoutant de l'oxyde cérique de surface 110 m2/g sur lequel du platine métallique est déposé.

| N° Exemp. | Pt complexe cata mg/kg | Pt métal sur CeO2 10m2/g mg/kg | Pt métal sur CeO2 110m2/g mg/kg | Pt total mg/kg | CeO2 total 10m2/g g/kg | CeO2 total 110m2/g g/kg | Résine M'Q g/kg | Epaisseur éprouvette en mm | T1 en secondes | T2 en secondes |
|---|---|---|---|---|---|---|---|---|---|---|
| 1 | 5 | | | 5 | | | | 1,6 | 335 | NS |
| 2 | 15 | | | 15 | | | | 1,6 | 187 | NS |
| 3 | 30 | | | 30 | | | | 1,6 | 60 | 23,5 |
| 4 | 30 | | | 30 | 25 | | | 1,8 | 27 | 23 |
| 5 | 30 | | | 30 | | 25 | | 2,4 | 5 | 10,5 |
| 6 | 5 | 25 | | 30 | 25 | | | 1,8 | 115 | NS |
| 7 | 5 | | 25 | 30 | | 25 | | 1,7 | 4,9 | 8,2 |
| 8 | 5 | | | 5 | | | 5 | 1,8 | 21,4 | 12,2 |
| 9 | 30 | | | 30 | | 25 | 5 | 2,4 | 4,6 | 4,4 |
| 10 | 5 | | 25 | 30 | | 25 | 5 | 2,4 | 6,5 | 15,5 |

**Revendications**

1 - Compositions pour l'obtention d'élastomères silicones, compacts ou cellulaires vulcanisables à température ambiante ou a une température inférieure à 150° C, résistant à la flamme, caractérisées en ce qu'elles contiennent de l'oxyde cérique de surface spécifique BET supérieure ou égale à 40 m2/g.

2 - Compositions pour l'obtention d'élastomères silicones résistant à la flamme, caractérisées en ce qu'elles contiennent de l'oxyde cérique de surface spécifique BET supérieure ou égale à 85 m2/g.

3 - Compositions selon l'une quelconque des revendications précédentes caractérisées en ce que l'oxyde cérique utilisée a été obtenue après calcination à une température comprise entre 300 et 600° C.

4 - Compositions selon l'une quelconque des revendications précédentes caractérisées en ce qu'elles contiennent de l'oxyde cérique et du platine.

5 - Compositions selon la revendication 4 caractérisées en ce qu'elles contiennent de l'oxyde cérique et du platine sous forme de complexe ou de composé du platine.

6 - Compositions selon la revendication 4 caractérisées en ce qu'elles contiennent de l'oxyde cérique et du platine sous forme métallique déposé sur ledit oxyde.

7 - Compositions selon l'une quelconque des revendications précédentes caractérisées en ce qu'elles comprennent du platine sous forme de complexe et de l'oxyde cérique sur lequel est déposé du platine métallique.

8 - Compositions selon l'une quelconque des revendications précédentes caractérisées en ce qu'elles comprennent de plus une résine polysiloxane, dite M'Q, c'est-à-dire une résine formée de motifs $H(R^t)_2SiO_{0,5}$ et de motifs $SiO_2$, dans laquelle le rapport des motifs monofonctionnels aux motifs tétrafonctionnels peut varier entre 0,5/1 et 10/1, le radical $R^t$ étant un radical hydrocarboné monovalent éventuellement halogéné.

9 - Elastomères obtenus avec les compositions selon l'une quelconque des revendications précédentes.

Office européen des brevets

# RAPPORT DE RECHERCHE EUROPEENNE

Numero de la demande

EP 89 42 0214

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 237 632 (DOW CORNING)<br>* Résumé 1,5,6; page 2, ligne 14-41; page 2, colonne de droite, paragraphe 2 * | 1 | C 08 K 3/22<br>C 08 L 83/04 |
| X | CHEMICAL ABSTRACTS, vol. 88, no. 24, 12 juin 1978, page 74, 171537b, Columbus, Ohio, US; & JP-A-78 06 356 (TOSHIBA SILICONE CO., LTD) 20-01-1978<br>* Résumé * | 1,4,9 | |
| A | EP-A-0 033 843 (DE GUSSA)<br>* Revendications 1,2,5; page 9, lignes 1-21 * | 1 | |
| A | FR-A-2 383 213 (DOW CORNING)<br>* Revendications 1,3 * | 1 | |
| A | US-A-3 008 901 (M.A. Baker)<br>* Revendication 1; colonne 2, lignes 30-42 * | 1 | |
| | | | **DOMAINES TECHNIQUES RECHERCHES (Int. Cl.4)** |
| | | | C 08 K<br>C 08 L |

Le présent rapport a été établi pour toutes les revendications

| Lieu de la recherche | Date d'achèvement de la recherche | Examinateur |
|---|---|---|
| LA HAYE | 20-09-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)